# EUROPEAN PATENT SPECIFICATION

(11) **EP 2 351 698 B1**
(45) Date of publication and mention of the grant of the patent: **20.08.2014**
(21) Application number: 08877699.2
(22) Date of filing: 27.10.2008
(51) Int. Cl.: B65G 1/04

(54) **TRANSFER SHUTTLE FOR AUTOMATED WAREHOUSE**
TRANSFERWAGEN FÜR AUTOMATISIERTES WARENLAGER
NAVETTE DE TRANSPORT POUR ENTREPÔT AUTOMATISÉ

(43) Date of publication of application: 03.08.2011
(73) Proprietor: Dematic Accounting Services GmbH, 63073 Offenbach (DE)
(72) Inventor: YAMASHITA, Shin, D63073 Offenbach (DE)
(74) Representative: Moser & Götze
(86) International application number: PCT/JP2008/069464
(87) International publication number: WO 2010/049987

(56) References cited:
- EP-A1- 0 733 563
- EP-A1- 1 772 400
- DE-U1-202004 004 620
- JP-A- 11 079 321
- JP-A- H08 324 721
- JP-A- 2000 211 706
- JP-A- 2003 048 604
- JP-A- 2006 096 522
- US-A1- 2003 185 656

## Description

### Technical Field

The present invention relates to an automated storage/retrieval system that includes at least one pair of multi-tier racks arranged parallel to each other and, in particular, to a transferring shuttle which is disposed between one pair of multi-tier racks and at each tier or every several tiers and horizontally travels so as to store a unit load to and retrieve a unit load from the multi-tier racks.

### Background Art

For such a type of automated storage/retrieval system, a system described in, e.g. Japanese Patent Application Laid-Open No. 8-324721 is well-know. The automated storage/retrieval system described in the above-mentioned publication includes at least one pair of left and right multi-tier racks each composed of multi-tier shelves. A transferring shuttle, which can run in a horizontal direction, is implemented between the multi-tier racks and at each tier.

The transferring shuttle is used for storing a unit load to and retrieving a unit load from the left or right multi-tier racks. The conventional transferring shuttle comprises a travelling platform that can carry a unit load on its mid area, and a picking mechanism for taking in and out the unit load on the travelling platform in horizontally lateral directions (both left and right directions) perpendicular to the traveling directions of the platform.

The conventional picking mechanism described in Japanese Patent Application Laid-Open No. 8-324721 comprises three-stage telescopic mechanisms provided in the front and rear of the unit-load carriage in the travelling platform, respectively. Each telescopic mechanism is a known mechanism constituted by a fixed rail fixed on the travelling platform, a first sliding rail slidably engaged with the fixed rail, and a second sliding rail slidably engaged with the first sliding rail. The first and second sliding rails are connected to each other with pulleys and a belt, so that, when the first sliding rail is moved leftward or rightward with respect to the fixed rail, the second sliding rail further moves in the same direction with respect to the first sliding rail. Means for activating the first sliding rail is constructed by a motor attached to the platform, a pinion attached to the rotary shaft of the motor, and a rack which is secured to the first sliding rail and meshes with the pinion.

Both end parts of the second sliding rail are provided with outer fingers each of which can be moved between a position at which the outer finger projects to the unit-load carriage and a position at which the outer finger is retracted from the unit-load carriage. When these outer fingers are placed at the projected position, the fingers can press against left and right end faces of a unit load and can take in and out the unit load.

Meanwhile, the automated storage/retrieval systems always have the need for increasing their storage capacity. For such a need, various strategies have conventionally been proposed. One of the strategies is a method that includes pushing unit loads to each shelf of the multi-tier racks as deep as possible (away from the traveling path of the transferring shuttle as farther as possible), and arranging the unit loads by, for example, two rows in the front and rear directions. For achieving this strategy, the left/right stroke of the telescopic mechanism of the transferring shuttle is required to be about two times that of the conventional one.

However, for doubling the stroke of the telescopic mechanism by modifying a typical transferring shuttle described in Japanese Patent Application Laid-Open No. 8-324721, it is necessary to provide at least three sliding rails in the telescopic mechanism. Thus increasing the number of sliding rails which are prone to wear may cause failures. This also complicates the system structure and makes it impossible to commonly design the shuttles having the standard and doubled strokes and purchase their parts, so that no advantage of scale can be expected, whereby the manufacturing cost increases. Further, since the telescopic mechanism becomes thicker, a space for inserting the sliding rails is required to be formed on a shelf of the multi-tier racks, which increases the clearance between unit loads, thereby inhibiting the improvement of the accommodating capacity.

US 2003/0185656 A1 discloses a load transferring shuttle with telescopic arms on both sides of a load handling platform which also has conveyor belts for handling load units. The telescopic arms each have terminal drivers and a middle driver inbetween, which can be orientated between a working position for contacting load units and a non-use position in which they do not interface with the load units and the conveyors.

EP 1 772 400 A1 discloses a similar load handling means in connection with an automatic storage and retrieval device, which does not have conveyors but a combination of conveyor belt strips and rollers.

It is an object of the present invention to provide a transferring shuttle which overcomes conventional problems such as those mentioned above and can store a greater number of unit loads on each shelf of multi-tier racks.

### Summary of Invention

A transferring shuttle in accordance with the present invention is disclosed by the combined features of claim 1.

In such a structure, the inner finger can push out the unit load on the unit-load carriage of the transferring shuttle. In the prior art, the outer fingers push out the unit load. On the other hand, the present invention employs a finger on the inner side to push out the unit load and minimizes the overlap between the rails, whereby the unit load can be transported to a deeper position in the multi-tier racks. This makes it possible for the multi-tier racks to accommodate a greater number of unit loads. More specifically, even in a three-stage telescopic mechanism identical to the conventional one, two unit loads can be arranged such as to align with each other in its extracting/retracting direction (two rows in the front and rear). Also, it is unnecessary to increase the number of rails constituting the telescopic mechanism, whereby there is no problem of increasing the clearance between unit loads. Since it is basically specified to add only the inner fingers, existing profiles (formed profile) can be used for the rails, whereby the manufacturing cost can be prevented from rising.

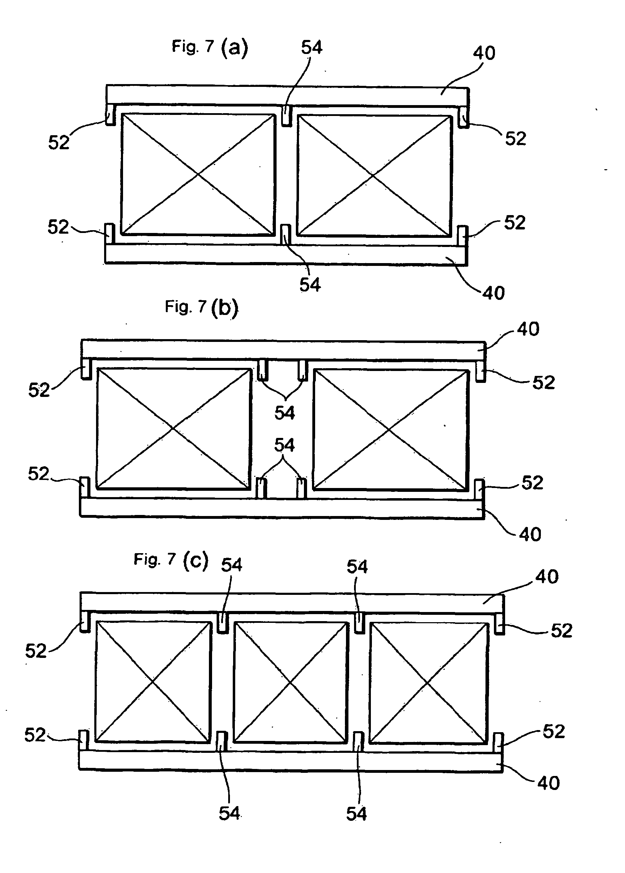

In accordance with the invention, there are two inner fingers. When there are two inner fingers, three unit loads can be handled at the same time depending on the sizes and forms of unit loads (see Fig. 7(c)). Also according to file the invention a distance adapted to place a unit load exists between one inner finger and the outer finger farther from the one inner finger and a distance adapted to place a unit load exists between the other inner finger and the other outer finger. When the outer finger is made movable to a position exceeding a length of two unit loads aligned on the multi-tier rack adjacent to the outer finger, unit loads can be arranged in two rows in the front and rear on a shelf of the multi-tier rack.

Each of the telescopic mechanisms may comprise a fixed rail, secured to the travelling platform, extending in a horizontally lateral direction perpendicular to the traveling direction; a first sliding rail slidably attached to the fixed rail in parallel with the horizontally lateral direction; and a second sliding rail slidably attached to the first sliding rail in parallel with the horizontally lateral direction and adapted to move in synchronization with the first sliding rail in the same direction as with the first sliding rail. In the arrangement, the second sliding rail is provided with the outer fingers and the inner finger.

In one embodiment of the present invention, means for driving the first sliding rail preferably comprises an endless belt, arranged in the travelling platform along the fixed rail, having a tooth on an outer periphery thereof; and a rack, provided with the first sliding rail, in mesh with the tooth on the outer periphery of the belt.

Using a belt having an outer tooth makes it possible for the first sliding rail to project more from the fixed rail. Though the amount of projection of sliding rails is severely restricted by the pinion employed in the above-mentioned conventional structure, using the belt having an outer tooth eliminates this adverse effect.

### Brief Description of Drawings

Fig. 1 is a partial perspective view illustrating an AS/RS employing a transferring shuttle in accordance with the present invention;
Fig. 2 is a side view of the transferring shuttle in accordance with the present invention;
Fig. 3 is a plan view illustrating the transferring shuttle in accordance with the present invention in a partly cutaway fashion;
Fig. 4 is a schematic view illustrating an operation of the transferring shuttle in accordance with the present invention;
Fig. 5 is a schematic view illustrating the principle of a telescopic mechanism in the transferring shuttle in accordance with the present invention;
Fig. 6 is a schematic view illustrating a main part of the transferring shuttle in accordance with the present invention; and
Fig. 7 is a view illustrating some modified examples of the transferring shuttle in accordance with the present invention.

### Description of Embodiments

In the following, preferred embodiments of the present invention will be explained in detail with reference to the accompanying drawings. In the drawings, the same reference characters indicated the same or equivalent portions.

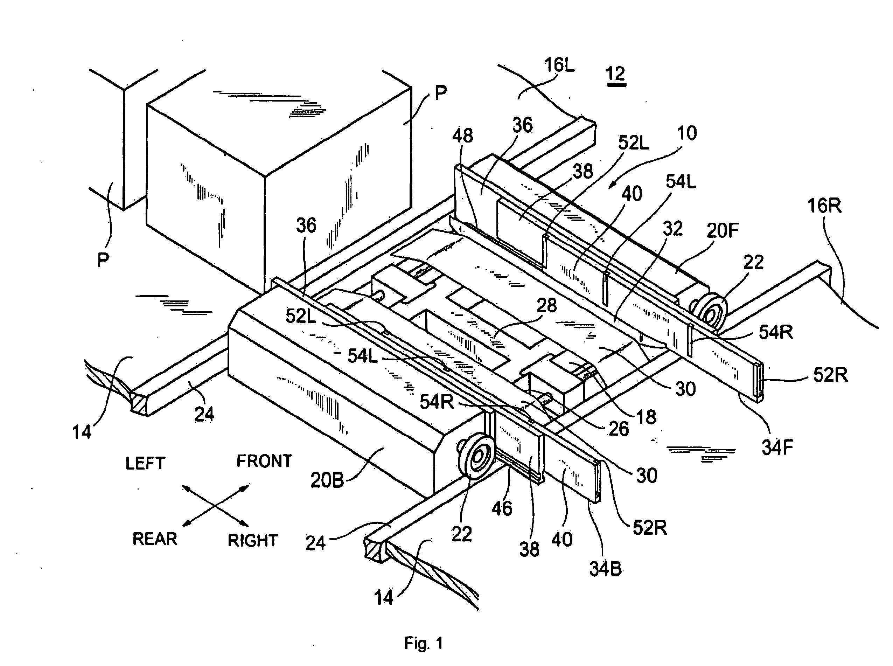

Fig. 1 is a perspective view illustrating a part of an automated storage/retrieval system 12 employing a transferring shuttle 10 in accordance with the present invention. The illustrated automated storage/retrieval system 12 comprises at least one pair of left and right multi-tier racks 16L, 16R, each including a plurality of shelves 14 which are multi-tiered. Between the multi-tier racks 16L, 16R, the transferring shuttle 10 in accordance with the present invention for transferring a unit load P to and from the multi-tier racks 16L, 16R is provided at each tier or every several tiers. In this embodiment, the multi-tier racks 16L, 16R accommodate unit loads P which are regularly shaped articles, such as buckets (returnable boxes made of plastics). Each shelf 14 in the multi-tier racks 16L, 16R has a depth (length in the left/right direction illustrated in Fig. 1) which is two times that of the conventional one, so that two unit loads P can be arranged in a row in the left/right lateral direction by a function of the transferring shuttle 10 in accordance with the present invention.

Though not illustrated, for transporting unit loads between the multi-tier racks 16L, 16R and an external conveyer system, a buffer station where the unit loads are transferred to and from the multi-tier racks 16L, 16R through the transferring shuttle 10 and temporarily wait or buffer when necessary, and an elevator for transferring the loads between the buffer station and the external conveyer system are provided on one end side or both end sides of the left and right multi-tier racks 16L, 16R.

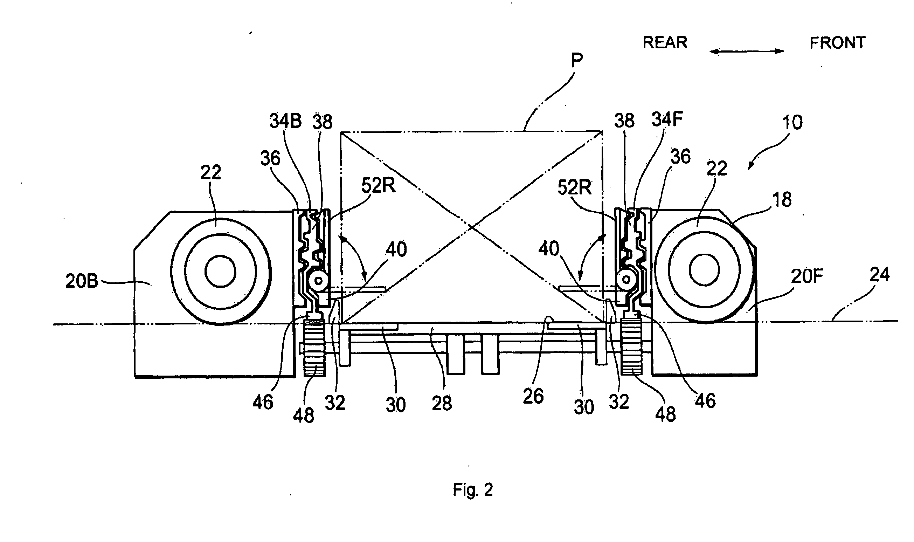

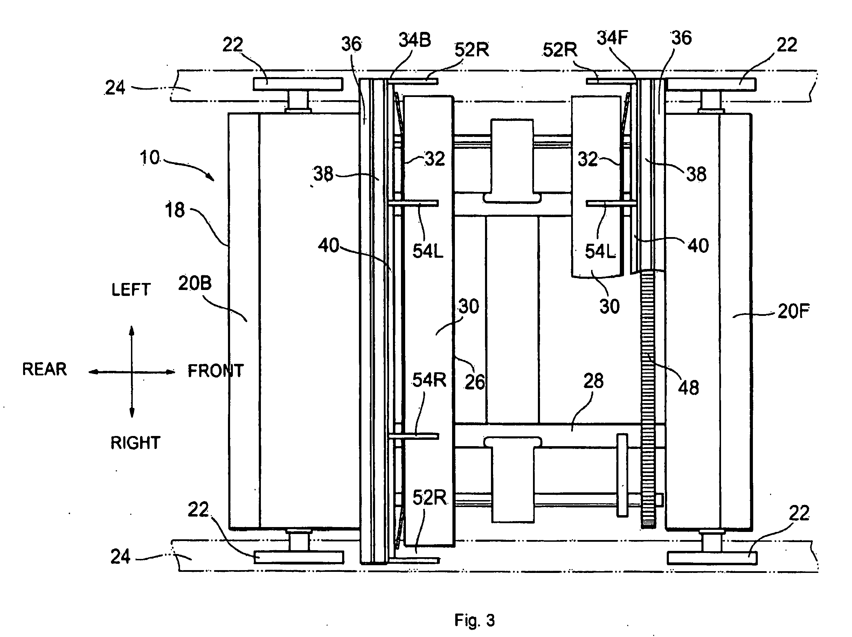

As also illustrated in Figs. 2 and 3, the transferring shuttle 10 in accordance with the present invention employed in the automated storage/retrieval system 12 such as the one mentioned above is equipped with a travelling platform 18 adapted to travel horizontally between the left and right multi-tier racks 16L, 16R. The front and rear parts of the travelling platform 18 in its traveling direction are provided with respective chassis parts 20F, 20B which accommodate therewithin a driving motor, a power/control unit, and the like (not illustrated). Wheels 22 are disposed on the left and right sides of the chassis parts 20F, 208, so as to be set on horizontally extending guide rails 24 provided with each tier of the left and right multi-tier racks 16L, 16R. Therefore, the travelling platform 18 can travel back and forth along the guide rails 24 when at least one of the wheels 22 is driven by the driving motor within the chassis part 20F or 20B.

The front and rear chassis parts 20F, 20B of the travelling platform 18 define therebetween a unit-load carriage 26 on which the unit load P is carried. More specifically, a base frame 28 for connecting the front and rear chassis parts 20F, 20B to each other exists therebetween, while a pair of unit-load carrying plates 30 horizontally placed on the base frame 28 define the bottom face of the unit-load carriage 26. Side guides 32 are formed at respective outer edge parts (on the sides closer to the adjacent chassis parts 20F, 20B) of the unit-load carrying plates 30, while the width between the side guides 32 is made slightly greater than that of the unit load P. This allows the unit load P to move laterally leftward and rightward on the unit-load carrying plates 30 without shifting transversely or rotating. The unit-load carriage 26 has a length (size in the left/right lateral direction) sufficient for receiving the typical unit load P to be handled.

The front and rear chassis parts 20F, 20B in the travelling platform 18 are provided with a pair of front and rear telescopic mechanisms 34F, 34B which hold the unit load P therebetween and take the unit load P in and out. The telescopic mechanisms 34F, 34B are driven in synchronization with each other, so as to be used for transferring the unit load P between the unit-load carriage 26 and the shelves 14 of the multi-tier racks 16L, 16R.

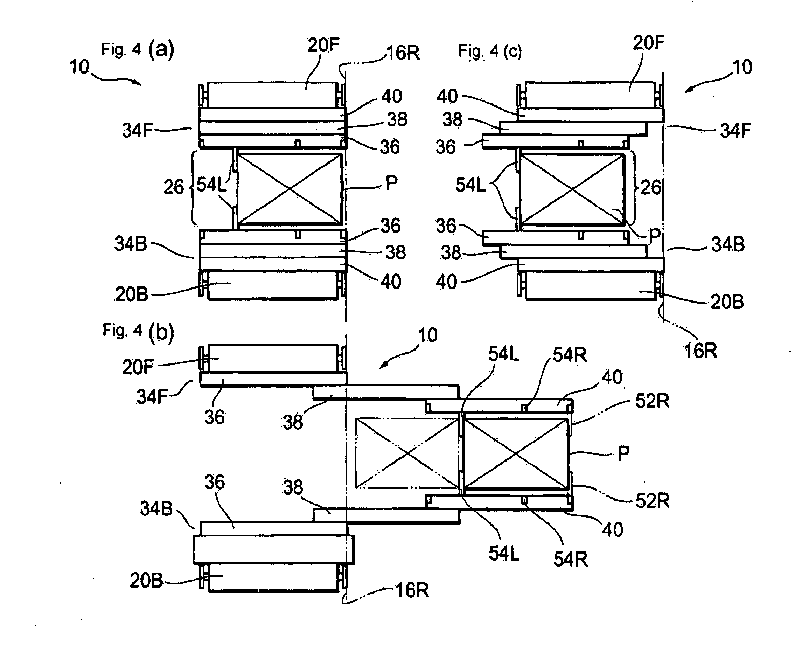

Each of the telescopic mechanisms 34F, 34B is constituted by: a fixed rail 36 which is secured to the inward face (surface facing the unit-load carriage 26) of the chassis part 20F, 20B and extends in left and right lateral directions, i.e., horizontally lateral directions orthogonal to the traveling directions of the travelling platform 18; a first sliding rail 38 attached to the fixed rail 36 so as to be slidable in the horizontally lateral directions; and a second sliding rail 40 attached to the first sliding rail 38 so as to be slidable in the horizontally lateral directions, having the largest movable range. The rails 36, 38, 40 have substantially the same length, which is also substantially the same as the width of the travelling platform 18 including the wheels 22. Therefore, when the travelling platform 18 travels, the rails 36, 38, 40 attain a contracted state illustrated in Figs. 2 and 3 and Fig. 4(a) which is a schematic view and thus do not project from side faces of the travelling platform 18, thereby yielding no fear of hindering the travel. On the other hand, they can be placed in an expanded state illustrated in Fig. 4(b) when transferring the unit load P to and from the multi-tier racks 16L, 16R. The rails 36, 38, 40 of the telescopic mechanism 34F, 34B are dimensioned such that leading end of the second sliding rail 40 reaches a point exceeding two unit loads P aligned in the extending/retracting direction (including their required clearance therebetween) when expanded to the maximum.

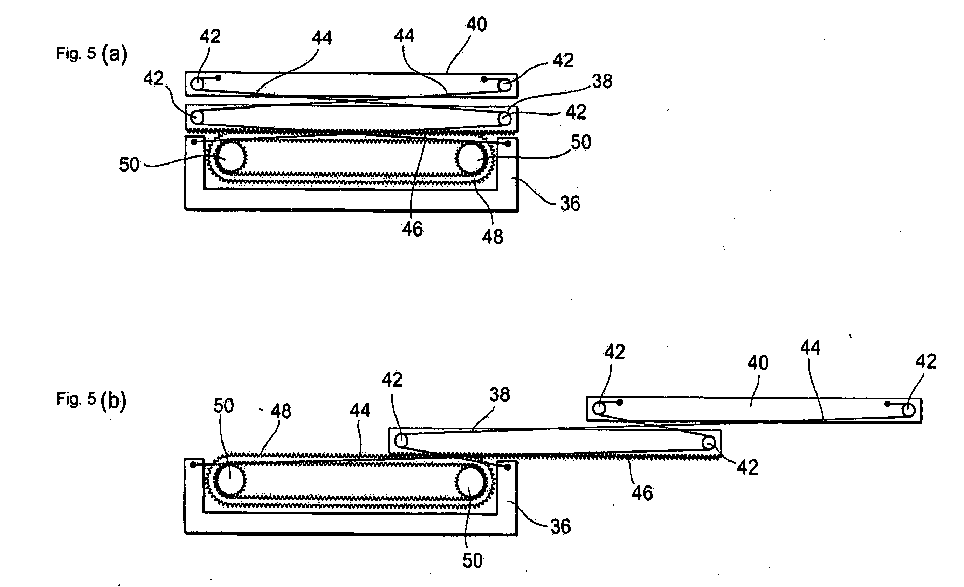

Contrivances for extending and retracting the telescopic mechanisms 34F, 34B are known ones such as those using pulleys 42 and belts (or wires) 44 illustrated in Fig. 5, which is a principle diagram, and are configured such that, when the first sliding rail 38 is moved left or right with respect to the fixed rail 36, the second sliding rail 40 further moves in the same direction along the first sliding rail 38.

Means for driving the first sliding rail 38 is constructed by: a rack 46 formed on a lower edge part of the first sliding rail 38 by the whole length thereof, a timing belt 48 (endless belt having inner teeth) whose outer periphery also has teeth in mesh with the rack 46, and a driving motor (not illustrated) for driving the timing belt 48. The timing belt 48 is mated with sprockets (see Fig. 5) provided at both of left and right end parts of the base frame 28, while the upper part (tight-side part) of the timing belt 48 extends over substantially the whole length between the left and right ends of the travelling platform 18. Therefore, when the telescopic mechanism 34F, 34B is in the contracted state, the rack 46 in the first sliding rail 38 is substantially wholly in mesh with the outer teeth of the timing belt 48. As long as the outer teeth of the timing belt 48 and the rack 46 are in mesh, the first sliding rail 38 can be projected from the fixed rail 36 to the maximum, and the second sliding rail 40 can be moved by the same distance relative to the first sliding rail 38. This can make the moving distance of the sliding rails 38, 40 longer than that in the conventional structure using a pinion and a rack as means for driving the telescopic mechanism 34F, 34B.

Though not illustrated, the driving motor for driving the timing belt 48 is accommodated in the chassis part 20B of the travelling platform 18.

Both ends of the second sliding rail 40 are respectively provided with outer fingers 52L, 52R for pushing and pulling the unit load P by coming into contact with its side faces. Each of the outer fingers 52L, 52R has one end secured to the rotary shaft of a driving motor (not illustrated) embedded in the second sliding rail 40, so as to be swingable between a position illustrated by solid lines in Fig. 2 and a position illustrated by solid lines in Fig. 3 (position illustrated by dash-double-dot lines in Fig. 2) when the driving motor is controlled. The position illustrated in Fig. 2 is a retracted position where the outer finger 52L, 52R is sufficiently retracted from the unit-load carriage 26 and kept from interfering with the unit load P on the unit-load carriage 26 or the unit loads P on the shelves 14 of the multi-tier racks 16L, 16R. On the other hand, the position in Fig. 3 is a projected position where the outer finger 52L, 52R projects into the unit-load carriage 26 and can come into contact with an end face of the unit load P mounted on the unit-load carriage 26.

In this embodiment, the second sliding rail 40 is further provided with two inner fingers 54L, 54R between the left and right outer fingers 52L, 52R. The inner fingers 54L, 54R have the same size and shape as those of the outer fingers 52L, 52R and are attached to the second sliding rail 40 in totally the same manner as with the outer fingers 52L, 52R. The inner fingers 54L, 54R are arranged equidistantly from the longitudinal center point of the second sliding frame 40. One inner finger (e.g., the left one 54L) is paired with the outer finger (the right outer finger 52R) farther therefrom and the distance therebetween is substantially equivalent to the length of the unit load P to be handled.

With the above-mentioned arrangement, cases where the unit load P is transferred from the transferring shuttle 10 to the multi-tier racks 16L, 16R and vice versa will now be explained.

First, when putting the unit load P into the deepest part (the position farthest from the transferring shuttle 10) of the shelf 14 in the right multi-tier rack 16R in the case where the unit load is mounted on the right side of the unit-load carriage 26 of the travelling platform 18 as illustrated in Fig. 4(a), the left inner finger 54L is pulled down to the projected position, and the telescopic mechanism 34F, 34B is driven so as to extend the sliding rails 38, 40 rightward. As a result, the inner finger 54L comes into contact with the left end face of the unit load P and pushes the unit load P to move. At the point of time when the second sliding rail 40 extends to the maximum, the unit load P reaches the deepest part of the shelf 14 of the multi-tier rack 16R (Fig. 4(b)).

It will easily be understood that the moving distance of the sliding rails 38, 40 is made shorter when placing the unit load P (at the position illustrated by dash-double-dot lines in Fig. 4(b)) on the front side of the multi-tier rack 16R (on the side closer to the transferring shuttle 10).

On the other hand, when the unit load P is placed on the left side of the unit-load carriage 26 of the travelling platform 18 as illustrated in Fig. 4(c), the sliding rails 38, 40 of the telescopic mechanism 34F, 34B are temporarily moved leftward such that the left inner finger 54L is positioned on the left side of the left end face of the load P, and then the inner finger 54L is pulled down, whereby the unit load P can be transported to the deepest part of the shelf 14 in the right multi-tier rack 16R as mentioned above.

When placing the unit load P (at the position illustrated by dash-double-dot lines in Fig. 4(b)) on the front side of the multi-tier rack 16R (on the side closer to the transferring shuttle 10), the unit load P can be moved by one stroke simply using the left outer finger without the movement of the telescopic mechanism described in the above paragraph [0031].

The movement described in the above paragraph [0032] becomes extra movement and thus is disadvantageous in terms of throughput. However, this movement can be avoided by contriving the movement for drawing the unit load P into the transferring shuttle 10. New unit loads P are usually fetched from the buffer station (not illustrated) where the unit loads wait. When the buffer station is positioned on the front side (usually in the moving direction of the telescopic mechanism), both of the outer and inner fingers reach there, so that the fingers can selectively be used according to the accommodating direction of the rack at the time of fetching the unit loads. This can avoid the movement described in the above paragraph [0032].

Example 1: When the buffer station is on the right side of Fig. 4 while the rack storage position is on the right side, the outer finger is used for fetching the unit load.

Example 2: When the buffer station is on the right side of Fig. 4 while the rack storage position is on the left side, the inner finger is used for fetching the unit load.

It will easily be understood that the same movement also yields the same effect when the buffer station is on the left side.

It will also be easily understood that the movement in the above paragraph [0032] can be avoided by using any of the inner and outer fingers for fetching the unit load P when the storage position is in the front.

Conversely, it will be understood that any of the two inner fingers 54L, 54R and right outer finger 52R may be used for the unit load P on the front side when fetching the unit loads P from the right multi-tier rack 16R into the transferring shuttle 10. That is, retracting the telescopic mechanism 34F, 34B from the state illustrated in Fig. 4(b) allows the left inner finger 54L to draw the unit load P into the transferring shuttle 10. Alternatively, the right outer finger 52R may be placed at the projected position as illustrated by dash-double-dot lines in Fig. 4(b) while the inner fingers 54L, 54R are kept at the retracted positions, whereby the outer finger 52R comes into contact with the right end face of the unit load P and can draw the same into the transferring shuttle 10.

It will easily be understood that a movement similar to that mentioned above can also avoid the movement mentioned in the above paragraph [0032] at the time of dispatching to the buffer station (fetching the unit load from the rack storage position in this case).

On the other hand, the right outer finger 52R is used for transferring the unit load P placed in the deepest part of the multi-tier rack 16R.

One skilled in the art will easily understand that the unit load P can be transferred to and from the left multi-tier rack 16L by a procedure in the reverse of that mentioned above.

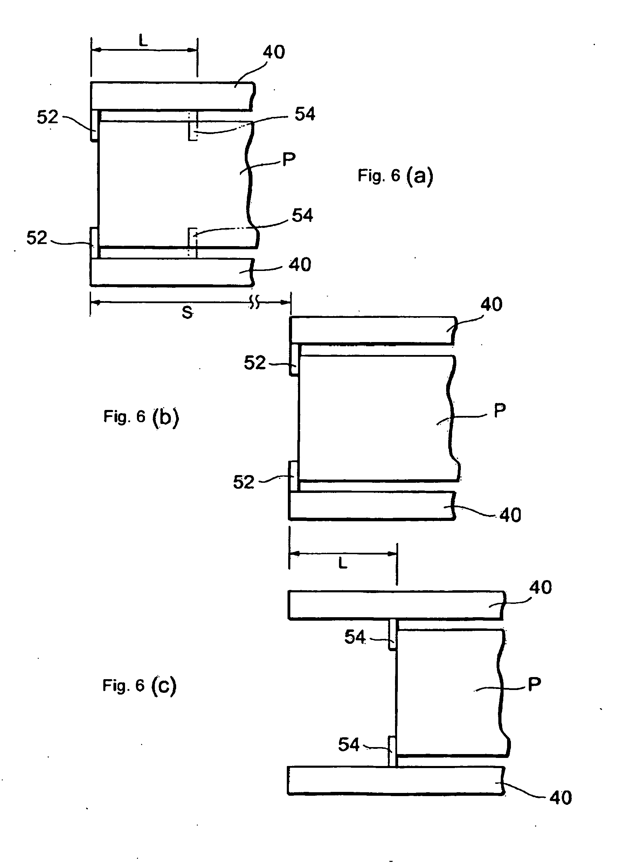

With reference to Fig. 6, the structure in accordance with the present invention will now be compared with a conventional structure having only outer fingers 52 at both end parts of the second sliding rail 40.

When the sliding rail 40 is moved from the state of Fig. 6(a) to the state of Fig. 6(b), the conventional structure can move the unit load P only by the same distance as the maximum movement distance S of the sliding rail 40. By contrast, using the inner finger 54 as in the present invention can further move the unit load P to a position exceeding the maximum movement distance of the sliding rail 40 by the distance L between the outer finger 52 and inner finger 54 as illustrated in Fig. 6(c). This allows the structure of the present invention to feed the unit load P into a deeper position in the multi-tier racks 16L, 16R, so that the unit loads P can be arranged in two rows of the front and rear.

In view of this point, only one inner finger 54 may be provided as illustrated in Fig. 7(a). This structure can transfer two small unit loads P at the same time. Arranging two inner fingers 54 closer to the center as illustrated in Fig. 7(b) can handle two unit loads P at the same time as in Fig. 7(a). An arrangement such as the one illustrated in Fig. 7(c) can handle three unit loads P at the same time. Though not illustrated, three or more inner fingers may be provided when handing unit loads P having irregular forms.

Though a preferred embodiment of the present invention is explained in detail in the foregoing, the present invention is not limited to the above-mentioned embodiment but can be modified and altered in various ways without deviating from the spirit or scope of the present invention.

Since the telescopic mechanism secures a large movable range, while the outer finger and inner finger can operate independently from each other, the present invention can transfer unit loads in various modes. When accommodating small unit loads in the right multi-tier rack in the structure illustrated in Figs. 1 to 3, for example, three or more unit loads can be stored into the shelf sequentially from its deepest part by using the right inner finger 54R. Also, two small unit loads or one small unit load and one middle unit load can be handled at the same time. That is, the right inner finger 54R and left outer finger 52L may be used such as to push respective unit loads.

Though a timing belt is used as the means for driving the telescopic mechanism, for example, structures using a hydraulic/pneumatic cylinder, a linear motor, and the like may also be considered.

Though three-stage telescopic mechanisms are effective in that they can use the same profile as that in the conventional structure, two- and four-stage telescopic mechanisms may also be employed.

## Claims

1. A transferring shuttle (10), used in an automated storage/retrieval system (12) includes a pair of multi-tier racks (16L, 16R) arranged parallel to each other, for storing a unit load (P) to and retrieving a unit load (P) from the multi-tier racks (16L, 16R), the transferring shuttle (10) comprising:
a travelling platform (18) adapted to travel horizontally between the multi-tier racks (16L, 16R), said travelling platform (18) having a unit-load carriage (26) on which the unit load (P) can be carried;
respective telescopic mechanisms (34F, 34B) provided in front and rear parts of the travelling platform (18), the unit-load carriage (26) being between the telescopic mechanisms (34F, 34B), each telescopic mechanism being constituted by a plurality of rails (36, 38, 40) adapted to expand and contract in a horizontally lateral direction perpendicular to the traveling direction of the travelling platform; and
respective outer fingers (52L, 52R) provided at both ends of the rail (40) having the largest movable range in the plurality of rails (36, 38, 40), each finger being operable between a projected position where the finger projects to the unit-load carriage (26) and a retracted position where the finger is retracted from the unit-load carriage (26),
the transferring shuttle (10) being between the outer fingers (52L, 52R), the rail (40) having the largest movable range is provided with an inner finger (54) operable between the projected position and the retracted position, the number of the inner fingers (54L, 54R) is 2 on each side of the rail and **characterized in that** a distance adapted to place a unit load (P) exists between one of the inner fingers (54L) and the outer finger (52R) farther from the one inner finger (54L), and a distance adapted to place a unit load (P) exists between the other inner finger (54R) and the other outer finger (52L).

2. The transferring shuttle according to claim 1, **characterized in that** the outer finger (52L, 52R) is movable to a position exceeding a length of at least two unit loads P aligned on the multi-tier rack (16L, 16R) adjacent to the outer finger (52L, 52R).

3. A transferring shuttle according to one of claims 1 or 2, **characterized in that** each of the telescopic mechanisms (34F, 34B) comprises:
a fixed rail (36), secured to the travelling platform (18), extending in a horizontally lateral direction perpendicular to the traveling direction;
a first sliding rail (38) slidably attached to the fixed rail (36) in parallel with the horizontally lateral direction; and
a second sliding rail (40) slidably attached to the first sliding rail (38) in parallel with the horizontally lateral direction and adapted to move in synchronization with the first sliding rail (38) in the same direction as with the first sliding rail (38);
wherein the second sliding rail (40) is provided with the outer fingers (52L, 52R) and the inner finger (54).

4. The transferring shuttle according to claim 3, **characterized in that** means for driving the first sliding rail (38) comprises an endless belt (48), arranged in the travelling platform (18) along the fixed rail (36), having a tooth on an outer periphery; and a rack (46), provided with the first sliding rail (38), in mesh with the tooth on the outer periphery of the belt (48).

## Patentansprüche

1. Transferwagen (10), der in einem automatisierten Regalbediensystem (12) verwendet wird, umfassend ein Paar von mehrgeschossigen Regalen (16L, 16R), die parallel zueinander angeordnet sind, zum Einlagern einer Einheitsladung (P) auf und zum Holen einer Einheitsladung (P) von den mehrgeschossigen Regalen (16L, 16R), wobei der Transferwagen (10) umfasst:
eine Fahrplattform (18), die dazu ausgebildet ist, horizontal zwischen den mehrgeschossigen Regalen (16L, 16R) verfahren zu werden, wobei die Fahrplattform (18) einen Einheitsladungsschlitten (26) aufweist, auf welchem die Einheitsladung (P) transportiert werden kann;
entsprechende Teleskopmechanismen (34F, 34B), die an einem vorderen und einem hinteren Teil der Fahrplattform (18) vorgesehen sind, wobei der Einheitsladungsschlitten (26) zwischen den Teleskopmechanismen (34F, 34B) angeordnet ist, wobei jeder Teleskopmechanismus durch mehrere Schienen (36, 38, 40) gebildet wird, die dazu ausgebildet sind, in einer horizontal seitlichen Richtung im rechten Winkel zu der Fahrtrichtung der Fahrplattform ausgefahren und eingefahren zu werden; und
entsprechende äußere Finger (52L, 52R), die an beiden Enden der Schiene (40) vorgesehen sind, welche den größten Bewegungsbereich der mehreren Schienen (36, 38, 40) aufweist, wobei jeder Finger zwischen einer vorstehenden Position, in welcher der Finger zu dem Einheitsladungsschlitten (26) hin vorsteht, und einer eingefahrenen Position, in welcher der Finger von dem Einheitsladungsschlitten (26) zurückgezogen ist, verstellbar ist,
wobei der Transferwagen (10) zwischen den äußeren Fingern (52L, 52R) ist, wobei die Schiene (40) mit dem größten Bewegungsbereich mit einem inneren Finger (54) versehen ist, der zwischen der vorstehenden Position und der eingefahrenen Position verstellbar ist, wobei die Anzahl der inneren Finger (54L, 54R) auf jeder Seite der Schiene zwei beträgt, und **dadurch gekennzeichnet, dass** ein Abstand, der dazu ausgebildet ist, eine Einheitsladung (P) zu platzieren, zwischen einem der inneren Finger (54L) und dem äußeren Finger (52R), der von dem einen inneren Finger (54L) weiter entfernt ist, vorhanden ist, und ein Abstand, der dazu ausgebildet ist, eine Einheitsladung (P) zu platziren, zwischen dem anderen inneren Finger (54R) und dem anderen äußeren Finger (52L) vorhanden ist.

2. Transferwagen nach Anspruch 1, **dadurch gekennzeichnet, dass** der äußere Finger (52L, 52R) zu einer Position bewegt werden kann, welche eine Länge von mindestens zwei Einheitsladungen P, die auf dem mehrgeschossigen Regal (16L, 16R) an den äußeren Finger (52L, 52R) angrenzend ausgerichtet sind, überschreitet.

3. Transferwagen nach einem der Ansprüche 1 oder 2, **dadurch gekennzeichnet, dass** jeder der Teleskopmechanismen (34F, 34B) umfasst:
eine feste Schiene (36), die an der Fahrplattform (18) befestigt ist und sich in einer horizontalen seitlichen Richtung im rechten Winkel zu der Fahrtrichtung erstreckt;
eine erste Gleitschiene (38), die an der festen Schiene (36) parallel zu der horizontalen seitlichen Richtung verschiebbar befestigt ist; und
eine zweite Gleitschiene (40), die an der ersten Gleitschiene (38) parallel zu der horizontalen seitlichen Richtung verschiebbar befestigt ist und dazu ausgebildet ist, sich synchron mit der ersten Gleitschiene (38) in dieselbe Richtung wie die erste Gleitschiene (38) zu bewegen;
wobei die zweite Gleitschiene (40) mit den äußeren Fingern (52L, 52R) und dem inneren Finger (54) versehen ist.

4. Transferwagen nach Anspruch 3, **dadurch gekennzeichnet, dass** ein Mittel zum Antreiben der ersten Gleitschiene (38) einen Endlosriemen (48), der in der Fahrplattform (18) entlang der festen Schiene (36) angeordnet ist und einen Zahn an einem Außenumfang aufweist, und eine Zahnstange (46), die mit der ersten Gleitschiene (38) bereitgestellt ist und mit dem Zahn an dem Außenumfang des Riemens (48) in Eingriff steht, umfasst.

## Revendications

1. Navette de transfert (10), utilisée dans un système automatique de stockage / récupération (12) comprend deux supports à plusieurs niveaux (16L, 16R) agencés parallèlement l'un à l'autre, pour le stockage d'une unité de charge (P) et la récupération d'une unité de charge (P) à partir des supports à plusieurs niveaux (16L, 16R), la navette de transfert (10) comprenant :
une plate-forme de déplacement (18) adaptée pour se déplacer horizontalement entre les supports à plusieurs niveaux (16L, 16R), ladite plate-forme de déplacement (18) ayant une unité de transport de charge (26) sur laquelle l'unité de charge (P) peut être transportée;
des mécanismes télescopiques respectifs (34F, 34B) prévues en avant et en arrière de la plate-forme de déplacement (18), l'unité de transport de charge (26) étant entre les mécanismes télescopiques (34F, 34B), chaque mécanisme télescopique étant constitué par une pluralité de rails (36, 38, 40) adaptés pour s'étendre et se rétracter dans une direction horizontale latérale perpendiculaire à la direction de déplacement de la plate-forme de déplacement; et
des doigts externes respectifs (52L, 52R) prévus aux deux extrémités du rail (40) qui a la plus grande plage de déplacement dans la pluralité de rails (36, 38, 40), chaque doigt pouvant être actionné entre une position avancée où le doigt saille vers l'unité de transport de charge (26) et une position rétractée où le doigt est rétracté par rapport à l'unité de transport de charge (26),
la navette de transfert (10) étant entre les doigts externes (52L, 52R), le rail (40) ayant la plus grande plage de déplacement est muni d'un doigt interne (54) pouvant fonctionner entre la position avancée et la position rétractée, le nombre de doigts internes (54L, 54R) est de 2 sur chaque côté du rail et **caractérisé en ce qu'**une distance adaptée pour placer une unité de charge (P) existe entre un des doigts internes (54L) et le doigt externe (52R) le plus éloigné dudit un doigt interne (54L), et une distance adaptée pour placer une unité de charge (P) existe entre l'autre doigt interne (54R) et l'autre doigt externe (52L).

2. Navette de transfert selon la revendication 1, **caractérisé en ce que** le doigt externe (52L, 52R) est mobile vers une position supérieure à une longueur d'au moins deux unités de charge P alignées sur le support à plusieurs niveaux (16L, 16R) adjacent au doigt externe (52L, 52R).

3. Navette de transfert selon l'une quelconque des revendications 1 ou 2, **caractérisé en ce que** chacun des mécanismes télescopiques (34F, 34B) comprend:
un rail fixe (36), solidaire de la plate-forme de déplacement (18), s'étendant dans une direction horizontale latérale perpendiculaire à la direction de déplacement;
un premier rail de glissement (38) fixé de manière coulissante sur le rail fixe (36) en parallèle avec la direction horizontale latérale; et
un second rail de coulissement (40) fixé de manière coulissante au premier rail de glissement (38) en parallèle avec la direction horizontale latérale et adapté pour se déplacer en synchronisation avec le premier rail de glissement (38) dans la même direction que le premier rail de glissement (38);
dans lequel le deuxième rail de glissement (40) est prévu avec les doigts externes (52L, 52R) et le doigt interne (54).

4. Navette de transfert selon la revendication 3, **caractérisé en ce qu'**un moyen pour entraîner le premier rail de glissement (38) comprend une courroie sans fin (48), agencée dans la plate-forme de déplacement (18) le long du rail fixe (36), ayant une dent sur un pourtour extérieur; et un support (46) prévu avec le premier rail de glissement (38), en prise avec la dent sur le pourtour extérieur de la courroie (48).
